**Europäisches Patentamt**

**European Patent Office**

**Office européen des brevets**

(19)

(11) Veröffentlichungsnummer: **0 474 093 A1**

## (12) EUROPÄISCHE PATENTANMELDUNG

(21) Anmeldenummer: **91114323.8**

(22) Anmeldetag: **27.08.91**

(51) Int. Cl.[5]: **A62D 3/00**, B09B 3/00

(30) Priorität: **03.09.90 DE 4027844**

(43) Veröffentlichungstag der Anmeldung:
**11.03.92 Patentblatt 92/11**

(84) Benannte Vertragsstaaten:
**AT BE CH DE ES FR GB IT LI NL SE**

(71) Anmelder: **Kali-Chemie Aktiengesellschaft**
**Postfach 220, Hans-Böckler-Allee 20**
**W-3000 Hannover 1(DE)**

(72) Erfinder: **Legat, Werner**
**Tollenbrink 2A**
**W-3000 Hannover 51(DE)**
Erfinder: **Zimmermann, Friedhelm**
**Dreishörner GmbH, Industriestrasse 4**
**W-4994 Preussisch Oldendorf(DE)**
Erfinder: **Huge, Wilfried**
**Dreishörner GmbH, Industriestrasse 4**
**W-4994 Preussisch Oldendorf(DE)**

(74) Vertreter: **Lauer, Dieter, Dr.**
**c/o Solvay Deutschland GmbH, Postfach 220**
**W-3000 Hannover(DE)**

(54) **Verfahren zur Zersetzung von Asbest.**

(57) Beschrieben wird die Zersetzung von Asbest mittels bestimmter Fluorid enthaltender Verbindungen. Besonders geeignet ist Tetrafluoroborsäure, insbesondere in Gel-Form.

EP 0 474 093 A1

Die vorliegende Erfindung betrifft ein Verfahren zur Zersetzung von Asbest.

Der Begriff "Asbest" ist ein Sammelname für verschiedene silikatische Mineralien, die Magnesium und zum Teil auch noch Eisen, Calcium, Aluminium und Natrium enthalten. Es gibt verschiedene Gruppen von Asbest-Formen. Man unterscheidet die beiden großen Gruppen der Serpentin- und Amphibol-Asbeste. Serpentin-Asbest, wichtigster Vertreter: Chrysotil, und Amphibol-Asbest, wichtigste Vertreter: Antophyllith-, Amositas-, Tremolit-, Aktinolith- und Krokydolith-Asbest wurden aufgrund ihrer Wärmebeständigkeit, Geschmeidigkeit, Verspinnbarkeit, Unbrennbarkeit und ihres Isoliervermögens vielfältig als Wärmedämm-, Feuerschutz- und Dichtungsmaterial verwendet.

Aufgrund gewisser toxischer Eigenschaften von Asbest ist es wünschenswert, verarbeiteten Asbest besonders aus Wohn- und Arbeitsräumen zu eliminieren und vor oder bei der Deponierung möglichst in eine unschädliche Form zu überführen. Aufgabe der vorliegenden Erfindung ist es, ein Verfahren zur Zersetzung von Asbest anzugeben, mit welchem Asbest im wesentlichen vollständig zersetzt werden kann.

Das erfindungsgemäße Verfahren zur Zersetzung von Asbest ist dadurch gekennzeichnet, daß man Asbest mit einer Fluor enthaltenden anorganischen Säure und/oder deren Alkalimetall- oder Ammoniumsalzen als Zersetzungsmittel, oder einer Zubereitung, die eine Fluor enthaltende anorganische Säure oder deren Alkalimetall -oder Ammoniumsalze als Zersetzungsmittel umfaßt, bei einer Temperatur zwischen Umgebungstemperatur und etwa 1000 °C behandelt.

Für den Fachmann ist selbstverständlich, daß man auch Gemische von solchen Zersetzungsmitteln oder Zubereitungen, die Gemische solcher Zersetzungsmittel enthalten, einsetzen kann. Das Zersetzungsmittel bzw. die Zubereitung ist vorzugsweise frei von Phosphorsäure und Phosphat.

Das Verfahren kann man auch dahingehend variieren, daß man neben dem Fluor enthaltenden Zersetzungsmittel eine Säure, insbesondere eine Mineralsäure, z.B. Salzsäure verwendet.

Gewünschtenfalls kann man das jeweilige Fluor enthaltende Zersetzungsmittel auch aus entsprechenden Fluor enthaltenden Mineralien oder Salzen und einer Säure in situ herstellen. Will man beispielsweise Tetrafluoroborsäure einsetzen, kann man Natriumtetrafluoroborat und eine Säure, beispielsweise Salzsäure, zusetzen. Analog kann man auch von entsprechenden Kalium-oder Natriumfluoraluminaten wie Cryolith und einer zugesetzten Säure, beispielsweise Salzsäure, ausgehen. Bevorzugt setzt man Fluor enthaltende Säuren ein und verzichtet auf den Zusatz fluorfreier Säuren.

Bevorzugt verwendet man als Zersetzungsmittel Fluorwasserstoff, Fluoroborsäuren, Fluoroaluminiumsäuren, Fluorokieselsäuren und/oder deren Alkali- oder Ammoniumsalze.

Zweckmäßig führt man die erfindungsgemäße Asbest-Zersetzung bei einem sauren pH-Wert durch. Ein solcher, vorteilhafter saurer pH-Wert wird erreicht, wenn man als Zersetzungsmittel eine der oben angegebenen, Fluor enthaltenen Säuren oder sauren Salzen verwendet. Sofern man von neutralen Alkali- oder Ammoniumverbindungen ausgeht, setzt man nötigenfalls zur Erzielung eines sauren pH-Wertes Säure, beispielsweise Salzsäure, zu. Zweckmäßig können als Zersetzungsmittel Natrium-, Kalium- oder Ammoniumhydrogendifluorid, Tetrafluoroborsäure und/oder Hexafluorkieselsäure eingesetzt werden. Bevorzugt verwendet man Tetrafluoroborsäure oder Gemische von Tetrafluoroborsäure und Hexafluorokieselsäure.

Die Zersetzung führt man zweckmäßig bei Drücken zwischen 0,5 und 5 atm durch. Niedrigere oder höhere Drücke sind zwar möglich, bringen aber keine Vorteile. Das Arbeiten bei Temperaturen obrhalb von 1000 °C ist möglich, bringt aber keine Vorteile.

In einer Variante des erfindungsgemäßen Verfahrens führt man die Zersetzung bei Normaldruck und Umgebungstemperatur durch. Der für die Deponie bestimmte zu zersetzende Asbest wird mit dem Zersetzungsmittel bzw. der das Zersetzungsmittel enthaltenden Zubereitung versetzt und, zweckmäßig nach inniger Durchmischung, in deponiefähige Behältnisse, beispielsweise lauge-, säure- und wetterbeständige Plastikfässer oder Plastiksäcke abgefüllt. Die Behältnisse werden dann unmittelbar deponiert. Im Verlauf einer gewissen Zeitspanne zersetzt sich der Asbest vollständig. Diese Variante des erfindungsgemäßen Verfahrens ist sehr energiesparend.

Gemäß einer anderen Variante des erfindungsgemäßen Verfahrens führt man die Zersetzung unter Erwärmung auf Temperaturen bis zu 1000 °C und bei einem Druck zwischen 0,5 und 5 atm, bevorzugt bei einer Temperatur zwischen 400 °C und etwa 1000 °C durch. Bei dieser Variante des erfindungsgemäßen Verfahrens wird der Asbest sehr schnell vollständig zersetzt. Die Zersetzungsprodukte können dann, gewünschtenfalls nach Neutralisation, gewünschtenfalls auch ohne Abfüllung in Behältnisse deponiert werden.

Bevorzugt verwendet man eine wäßrige Zubereitung mit vorzugsweise 5-70, insbesondere 25-50 Gew.-% Zersetzungsmittel, beispielsweise in Form einer wäßrigen Lösung, einer wäßrigen Aufschlämmung, einer verdickten wäßrigen Zubereitung oder eines Gels auf wäßriger Basis. Bevorzugt verwendet man das Zersetzungsmittel in Form einer verdickten wäßrigen Zubereitung, insbesondere in Form eines Gels auf wässeriger Basis.

Bevorzugt verwendet man im Verfahren der vorliegenden Erfindung eine verdickte wäßrige Zubereitung, welche, bezogen auf das Gesamtgewicht der fertigen Zubereitung, 5 bis 55 Gew.-%, vorzugsweise 25 bis 40 Gew.-% Zersetzungsmittel, 0,1 bis 25 Gew.-% eines Verdickungsmittels bzw. Gelbildners sowie Wasser enthält, wobei die Summe der Bestandteile 100 Gew.-% ergibt. Gewünschtenfalls können noch übliche Hilfsstoffe, z.B. Pigmente enthalten sein.

Sofern ein Gemisch von Tetrafluoroborsäure und Hexafluorokieselsäure als Zersetzungsmittel verwendet wird, kann das Molverhältnis von Tetrafluoroborsäure zu Hexafluorokieselsäure in einem weiten Bereich schwanken, z.B. von 1:100 bis 100:1.

Als Gelbildner bzw. Verdickungsmittel verwendet man zweckmäßigerweise einen säurefesten Gelbildner bzw. Verdickungsmittel. Als Gelbildner bzw. Verdickungsmittel kann man jene Substanzen verwenden, wie sie auch in der Lackindustrie für diesen Zweck verwendet werden. Geeignet sind insbesondere anorganische Verdickungsmittel, z.B. Tonmineralien oder Kieselsäure enthaltende Produkte, insbesondere amorphe Kieselsäuren mit hydrophilen Eigenschaften. Sehr gut geeignet sind hydrophile, flammenhydrolytisch hergestellte amorphe Kieselsäuren vom Aerosil-Typ mit hoher BET-Oberfläche, z.B. von 80 bis 350 $m^2$/g. Geeignet sind weiterhin auch organische Verdickungsmittel, beispielsweise abgewandelte Naturstoffe wie Cellulosederivate, z.B. Ethylcellulose.

Je größer der Gehalt an Verdickungsmittel bzw. Gelbildner in der verdickten wäßrigen Zubereitung ist, desto dickflüssiger ist die verwendete Zubereitung. Bevorzugt verwendet man Zubereitungen, in welchen der Gelbildner bzw. das Verdickungsmittel mindestens in einer solchen Menge enthalten ist, daß die Zubereitung in Form eines Gels auf wäßriger Basis vorliegt. Die Mindestmenge an Verdickungsmittel bzw. Gelbildner, die in einer solchen Zubereitung enthalten sein muß, ist abhängig insbesondere vom jeweils verwendeten Verdickungsmittel bzw. Gelbildner. Bevorzugt verwendet man Gele auf wäßriger Basis, welche amorphe, hydrophile Kieselsäure vom Aerosil-Typ als Gelbildner in einer Menge von etwa 8 bis 25 Gew.-% enthalten.

Das Zersetzungsmittel wird in einer solchen Menge zugesetzt, daß der zu zersetzende Asbest im wesentlichen vollständig zersetzt werden kann. Die benötigte Menge an Zersetzungsmittel kann je nach Zersetzungsbedingungen, Art und Zubereitung des Zersetzungsmittels und Art und Form des zu zersetzenden Asbestes und gewünschter Zersetzungsdauer variieren. Im Bedarfsfall kann der Fachmann die notwendige Mindestmenge an Zersetzungsmittel bestimmen, indem er den Asbest unter Anwendung steigender Mengen von Zersetzungsmitteln zersetzt. Der Grad der Zersetzung kann röntgendiffraktometrisch durch Messung des für Asbest charakteristischen $Si_4O_{10}$-Peaks gemessen werden. Die Zersetzung ist dann vollständig, wenn der charakteristische $Si_4O_{10}$-Peak im Röntgenspektrum auf den Blindwert zurückgeführt wurde.

Üblicherweise setzt man das Zersetzungsmittel in einer Menge von 10 bis 150 Gew.-%, bezogen auf die zu zersetzende Menge an Asbest, ein. Mengen von über 150 Gew.-% sind möglich, bringen aber keine weiteren Vorteile. Üblicherweise erweisen sich Mengen im Bereich von 10 bis 30 Gew.-% als ausreichend. Man kann im oberen Bereich arbeiten, beispielsweise zwischen 30 und 150 Gew.-%, wenn man dickere Asbestschichten, beispielsweise dickere Schichten von Spritzasbest zersetzen will.

Mit dem erfindungsgemäßen Verfahren können prinzipiell alle Asbest-Modifikationen zersetzt werden.

Im Prinzip kann man mit dem erfindungsgemäßen Verfahren Asbest aus beliebigen Formteilen, beispielsweise aus Platten, Spritzasbest, Asbestwolle etc. zersetzen. Zweckmäßige sollten die asbesthaltigen Produkte gebrochen in das erfindungsgemäße Verfahren eingesetzt werden.

Sofern der Asbest allerdings in base- bzw. säurefestem Trägermaterial eingebunden ist, beispielsweise in Zement oder Gips, müssen gegebenenfalls größere Mengen Zersetzungsmittel in Verbindung mit einer weitgehenden Zerkleinerung dieses Materials eingesetzt werden.

Die erfindungsgemäßen Gele können einerseits verwendet werden, um Asbest, wie oben beschrieben, deponiefähig zu zersetzen. Andererseits können die Gele vorteilhaft verwendet werden, um Asbest aus bestehenden Bauteilen von Gebäuden oder Geräten, beispielsweise nach Ausbau von Asbestteilen, auf einfache Weise sicher unter Zersetzung zu entfernen. Es ist beispielsweise möglich, in Arbeits- oder Wohnräumen Asbestbauteile soweit als möglich zu entfernen und wie oben beschrieben deponiefähig zu zersetzen. An Ort und Stelle verbleibende Asbestreste, beispielsweise auf Wänden aufgebrachte, z.B. aufgeklebte Asbestreste werden mit der erfindungsgemäßen Zubereitung, insbesondere dem erfindungsgemäßen Gel bestrichen und dadurch zu unschädlichen Produkten zersetzt. Auf diese Weise ermöglicht das erfindungsgemäße Verfahren die arbeitssparende, sichere Zersetzung an Ort und Stelle.

Ein weiterer Gegenstand der Erfindung ist eine zur Anwendung im erfindungsgemäßen Verfahren geeignete verdickte wäßrige Zubereitung. Die erfindungsgemäße Zubereitung enthält 5 bis 55 Gew.-%, vorzugsweise 25 bis 40 Gew.-% einer Fluor enthaltenden anorganischen Säure und/oder deren Alkalimetall-oder Ammoniumsalze als Zersetzungsmittel, 0,1 bis 25 Gew.-% eines Gelbildners oder Verdickungsmittels, gegebenenfalls übliche Hilfs-stoffe.

Bevorzugte Zubereitungen enthalten Fluorwas-serstoff, Fluoroborsäuren, Fluoroaluminiumsäuren, Fluorokieselsäuren und/ oder deren Alkalimetall-oder Ammoniumsalze als Zersetzungsmittel.

Besonders bevorzugte Ausführungsformen der erfindungsgemäßen verdickten wäßrigen Zubereitung enthalten 5 bis 55 Gew.-%, vorzugsweise 25 bis 40 Gew.-% Tetrafluoroborsäure oder ein Ge-misch von Tetrafluoroborsäure und Hexafluorokie-selsäure, 0,1 bis 25 Gew.-% eines Gelbildners bzw. Verdickungsmittels, gegebenenfalls übliche Hilfsstoffe sowie Wasser, wobei die Summe der Bestandteile 100 Gew.-% ergibt. Das Molverhältnis von Tetrafluoroborsäure zu Hexafluorokieselsäure kann in einem weiten Bereich, beispielsweise von 1:100 bis 100:1 liegen.

Als Gelbildner oder Verdickungsmittel verwendet man zweckmäßigerweise einen säurefesten Gelbildner bzw. Verdickungsmittel. Als Gelbildner bzw. Verdickungsmittel kann man jene Substanzen verwenden, wie sie auch in der Lackmindustrie für diesen Zweck verwendet werden. Geeignet sind insbesondere anorganische Verdickungsmittel, z. B. Tonmineralien oder Kieselsäure enthaltende Produkte, insbesondere amorphe Kieselsäure mit hydrophilen Eigenschaften. Sehr gut geeignet sind hydrophile, flammenhydrolytisch hergestellte amorphe Kieselsäuren vom Aerosil-Typ mit hoher BET-Oberfläche, z.B. von 80 bis 350 m$^2$/g. Als Hilfsstoffe können z. B. Pigmente enthalten sein.

Geeignet sind beispielsweise auch organische Verdickungsmittel oder Gelbildner wie abgewandelte Naturstoffe wie Cellulosederivate, z.B. Ethylcellulose.

Ganz besonders bevorzugt sind wäßrige Zubereitungen in Form eines Gels auf wäßriger Basis, welche 5 bis 55 Gew.-%, vorzugsweise 25 bis 40 Gew.-% Zersetzungsmittel, einen Gelbildner bzw. Verdickungsmittel in mindestens der zur Bildung eines Gels notwendigen Menge bis hin zu 25 Gew.-%, gegebenenfalls übliche Hilfsstoffe sowie Wasser umfaßt, wobei die Summe der Bestandteile 100 Gew.-% ergibt.

Ganz besonders bevorzugt sind wäßrige Zubereitungen in Form eines Gels auf wäßriger Basis, welche als Gelbildner bzw. Verdickungsmittel amorphe, hydrophile Kieselsäure in einer Menge von etwa 8 bis 25 Gew.-% enthalten.

In einer Variante können bis zu 2/3 der eingesetzten Menge des Fluor enthaltenden Zersetzungsmittels durch eine Säure, bevorzugt eine Mineralsäure, z.B. Salzsäure, ersetzt sein. Diese Variante kann besonders dann vorteilhaft sein, wenn man als Fluor enthaltendes Zersetzungsmittel Alkali-oder Ammoniumsalze von Fluor enthaltenden Säuren einsetzt.

Diese erfindungsgemäßen Gele können sehr gut sowohl bei der deponiefähigen Zersetzung von Asbest als auch für die Asbestzersetzung an Ort und Stelle eingesetzt werden.

Das Zersetzungsmittel bzw. die Zubereitung ist vorzugsweise frei von Phosphorsäure und Phosphat.

Das Zersetzungsprodukt kann man gewünschtenfalls noch neutralisieren, z.B. mit Kalkmilch.

Zweckmäßig führt man die Zersetzung in geeigneten Behältnissen durch. Die Zersetzung insbesondere bei höherer Temperatur kann man z.B. in Behältnissen durchführen, die gegen Fluorid und Fluorwasserstoff und andere Bestandteile des jeweiligen Zersetzungsmittels resistent sind, z.B. in mit Teflon ausgekleideten Behältnissen oder in Behältnissen aus Edelstahl oder Stahllegierungen.

Die folgenden Beispiele sollen das erfindungsgemäße Verfahren weiter erläutern, ohne es in seinem Umfang einzuschränken.

Beispiele

Beispiel 1:

Anwendung von Tetrafluoroborsäure zur Zersetzung von Spritzasbest bei Umgebungstemperatur

Spritzasbest wurde grob zerkleinert, mit etwa 25 Gew.-%, bezogen auf die eingesetzte Asbestmenge, Tetrafluoroborsäure in Form einer 33 Gew.-% Tetrafluoroborsäure enthaltenden wäßrigen Lösung vermischt und in 50-Liter-Plastiksäcke abgefüllt. Die Säcke wurden deponiert. Während der Deponierung wandelte sich der Asbest durch Einwirkung des zugesetzten Tetrafluoroborsäure allmählich in unschädliche Verbindungen um.

Beispiel 2:

Anwendung von $NH_4HF_2$ zur Zersetzung von Plat-tenasbest bei höherer Temperatur

Plattenasbest wurde auf eine Teilchengröße von 0,5 bis 3 mm zerkleinert, mit etwa 15 Gew.-%, bezogen auf die eingesetzte Asbestmenge, $NH_4HF_2$ in Form einer 50 gew.-%igen wäßrigen Lösung vermischt und 12 Minuten bei einer Temperatur von etwa 550 °C gehalten. Nach dem Abkühlen wurde eine Probe der Mischung entnommen und röntgenspektroskopisch untersucht. Das für Asbest charakteristische Signal der $Si_4O_{10}$-Grup-pen war auf den Blindwert zurückgeführt.

Beispiel 3:

Anwendung von Tetrafluoroborsäure in Gelform zur Zersetzung von Spritzasbest

3.1. Herstellung des Gels

1.000 g einer im wesentlichen fluorwasserstofffreien handelsüblichen wäßrigen Tetrafluoroborsäurelösung (Gehalt an Tetrafluoroborsäure: etwa 33 Gew.-%, Dichte: 1,25 kg/l bei 20 °C) wurde mit 120 g einer hydrophilen, flammenhydrolytisch hergestellten amorphen Kieselsäure versetzt. Es wurde ein lagerstabiles, standfestes Gel erhalten. Die Ausbeute ist bezogen auf die eingesetzte Tetrafluoroborsäure quantitativ.

3.2. Anwendung zur Zersetzung von Spritzasbest

Das gemäß Beispiel 3.1. hergestellte Gel wurde auf Spritzasbest aufgestrichen. Nach einer Einwirkungszeit von 15 Minuten war der Spritzasbest zersetzt, wie eine röntgendiffraktometrische Untersuchung einer Probe ergab.

Beispiel 4:

Anwendung eines Gemisches von Tetrafluoroborsäure und Hexafluorokieselsäure in Gelform zur zersetzung von Asbestfasern

4.1. Herstellung des Gels

900 g einer im wesentlichen fluorwasserstofffreien wäßrigen Tetrafluoroborsäurelösung (Gehalt: etwa 33 Gew.-% Tetrafluoroborsäure), 100 g einer konzentrierten wäßrigen, im wesentlichen fluorwasserstofffreien Hexafluorokieselsäurelösung (Gehalt: etwa 60 Gew.-% Hexafluorokieselsäure) und etwa 120 g einer hydrophilen, flammenhydrolytisch gewonnenen amorphen Kieselsäure wurden miteinander vermischt. Es wurde ein lagerstabiles, standfestes Gel erhalten. Ausbeute: quantitativ.

4.2. Anwendung des Gels zur Zersetzung von Asbestfasern

Das gemäß Beispiel 4.1. hergestellte Gel wurde auf faserhaltigen Asbestplatten aufgestrichen. Nach einer Einwirkungszeit von 15 Minuten wurde eine Probe entnommen. Durch röntgendiffraktometrische Untersuchung wurde festgestellt, daß die für Asbest charakteristischen $Si_4O_{10}$-Peaks verschwunden waren und somit die Asbestfasern zersetzt worden waren.

**Patentansprüche**

1. Verfahren zur Zersetzung von Asbest, dadurch gekennzeichnet, daß man Asbest mit einer Fluor enthaltenden anorganischen Säure und/oder deren Alkalimetall- oder Ammoniumsalzen als Zersetzungsmittel, oder einer Zubereitung, die eine Fluor enthaltende anorganische Säure oder deren Alkalimetall- oder Ammoniumsalze als Zersetzungsmittel umfaßt, bei einer Temperatur zwischen Umgebungstemperatur und etwa 1000 °C behandelt.

2. Verfahren nach Anspruch 1, dadurch gekennzeichnet, daß man als Zersetzungsmittel Fluorwasserstoff, Fluoroborsäuren, Fluoroaluminiumsäuren, Fluorokieselsäuren und/oder ihre Alkali- oder Ammoniumsalze verwendet.

3. Verfahren nach Anspruch 1 oder 2, dadurch gekennzeichnet, daß man als Zersetzungsmittel Natrium-, Kalium- oder Ammoniumhydrogendifluorid, Tetrafluoroborsäure und/oder Hexafluorokieselsäure verwendet.

4. Verfahren nach einem der vorhergehenden Ansprüche, dadurch gekennzeichnet, daß das Zersetzungsmittel weiterhin eine Säure, vorzugsweise eine Mineralsäure enthält.

5. Verfahren nach einem der vorhergehenden Ansprüche, dadurch gekennzeichnet, daß die das Zersetzungsmittel enthaltende Zubereitung eine wasserhaltige Zubereitung, insbesondere eine wäßrige Lösung, eine wäßrige Aufschlämmung, bevorzugt eine verdickte wäßrige Zubereitung, insbesondere ein Gel auf wäßriger Basis darstellt.

6. Verfahren nach einem der vorhergehenden Ansprüche, dadurch gekennzeichnet, daß man die Zersetzung bei Temperaturen zwischen Umgebungstemperatur und etwa 1000 °C und einem Druck zwischen 0,5 und 5 Atmosphären durchführt.

7. Verfahren nach einem der vorhergehenden Ansprüche, dadurch gekennzeichnet, daß man die Zersetzung bei Umgebungstemperatur und Normaldruck durchführt.

8. Verfahren nach einem der Ansprüche 1 bis 6, dadurch gekennzeichnet, daß man die Zersetzung unter Erwärmung auf Temperaturen bis zu 1000 °C, vorzugsweise auf Temperaturen zwischen 400 °C und etwa 1000 °c durchführt.

9. Verfahren nach einem der vorhergehenden Ansprüche, dadurch gekennzeichnet, daß man das Zersetzungsmittel in einer Menge von 10 bis 150 Gew.-%, bezogen auf die zu zersetzenden Mengen Asbest, einsetzt.

10. Verdickte wäßrige Zubereitung mit asbestzersetzender Wirkung zur Anwendung im erfindungsgemäßen Verfahren, enthaltend 5 bis 55 Gew.-%, vorzugsweise 25 bis 40 Gew.-% einer Fluor enthaltenden anorganischen Säure und/oder deren Alkalimetall- oder Ammoniumsalze als Zersetzungsmittel, 0,1 bis 25 Gew.-% eines Gelbildners oder Verdickungsmittels, gegebenenfalls übliche Hilfsstoffe.

11. Zubereitung nach Anspruch 10, enthaltend Fluorwasserstoff, Fluoroborsäuren, Fluoroaluminiumsäuren, Fluorokieselsäuren und/ oder deren Alkalimetall- oder Ammoniumsalze als Zersetzungsmittel.

12. Zubereitung nach Anspruch 10 oder 11, enthaltend Tetrafluoroborsäure als Zersetzungsmittel.

13. Zubereitung nach Anspruch 10, enthaltend ein Gemisch von Tetrafluoroborsäure und Hexafluorokieselsäure als Zersetzungsmittel.

14. Zubereitung nach Anspruch 10, dadurch gekennzeichnet, daß bis zu 2/3 der Menge des Fluor enthaltenden Zersetzungsmittels durch eine Säure, insbesondere eine Mineralsäure, ersetzt ist.

15. Zubereitung nach einem der Ansprüche 10 bis 14 in Form eines Gels auf wäßriger Basis, umfassend einen Gelbildner bzw. ein Verdickungsmittel in mindestens der zur Bildung eines Gels notwendigen Menge bis hin zu 25 Gew.-%.

16. Verdickte wäßrige Zubereitung nach einem der Ansprüche 10 bis 15, dadurch gekennzeichnet, daß sie als Gelbildner oder Verdickungsmittel hydrophile Kieselsäure enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 372 084  (NIPPON STEEL CHEMICAL CO. LTD.) <br> * Seite 1, Zeile 18 - Seite 2, Zeile 9 * * * Seite 4, Zeile 8-16 * * <br> * Seite 7, Zeile 9-23 * * * Seite 10, Zeile 20 - Seite 14, Zeile 11; Ansprüche; Beispiele 3,5,7 * * <br> — — — | 1-16 | A 62 D 3/00 <br> B 09 B 3/00 |
| X | US-A-3 708 014  (R.F.WALLY) <br> * das ganze Dokument * * <br> — — — | 1,2,4-7,9 | |
| X | CA-A-1 114 533  (CENTRE DE RECHERCH INDUSTRIEL-LE DU QUEBEC) <br> * Seite 7, Zeile 28 - Seite 8, Zeile 32; Ansprüche * * <br> — — — | 1,2,4-7,9 | |
| A | DE-A-3 728 787  (H.HIENDL) <br> * das ganze Dokument * * <br> — — — — — | 1,4-9 | |

| RECHERCHIERTE SACHGEBIETE (Int. Cl.5) |
|---|
| A 62 D <br> B 09 B |

**Der vorliegende Recherchenbericht wurde für alle Patentansprüche erstellt**

| Recherchenort | Abschlußdatum der Recherche | Prüfer |
|---|---|---|
| Den Haag | 10 Dezember 91 | FLETCHER A.S. |